(19) Europäisches Patentamt
European Patent Office
Office européen des brevets

(11) EP 3 745 281 A1

(12) EUROPEAN PATENT APPLICATION

(43) Date of publication:
02.12.2020 Bulletin 2020/49

(51) Int Cl.:
*G06F 16/55* (2019.01)

(21) Application number: 19177419.9

(22) Date of filing: 29.05.2019

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: Technische Universität Darmstadt
64289 Darmstadt (DE)

(72) Inventors:
• STAB, Christian
64289 Darmstadt (DE)
• DAXENBERGER, Johannes
64289 Darmstadt (DE)
• GUREVYCH, Iryna
64289 Darmstadt (DE)

(74) Representative: Zahn, Matthias et al
Peter Bittner und Partner
Herrenwiesenweg 2
69207 Sandhausen (DE)

(54) PROVIDING MACHINE-LEARNING TRAINING DATA FOR A DIFFERENTIATOR MODULE TO IDENTIFY DOCUMENT PROPERTIES

(57) A computer (201) provides machine-learning training data (125) for a differentiator module (202) that is adapted to identify a document property (370). The computer (201) receives a first set (100~0) of reference documents with sentences. The computer (201) uses a selector module (201-A) to select a second set (100~2) of reference documents, the candidate set being a sub-set with documents that comply with both a topic condition and an argument condition. In application to each reference document of the second set (100~2), a classifier module classifies the sentences into sentences either with a first sentence attribute (+) or a second sentence attribute (-). The computer provides training data (125) for the differentiator module (202) by providing the sentences with the first sentence attribute (+).

FIG. 10

EP 3 745 281 A1

## Description

## Technical Field

In general, the disclosure relates to computer-implemented techniques, involving machine-learning. More in particular, the disclosure relates to computer-implemented methods, systems and computer programs to differentiate documents according to document properties.

## Background

Documents convey information in different concepts, forms and formats. For example, a text document conveys information by a sequence of sentences, with a sentence being a sequence of words, and a word being a sequence of characters. For example, a picture document conveys information graphically, by combinations of pixels etc.

Document formats can be combined (e.g., combinations of texts and pictures).

Computers can recognize content by using techniques that are frequently summarized by terms such as "pattern recognition", "computer vision" etc. The computers can provide recognized content in a format that is adapted to be processed by further computers. For example, a computer can recognize that a particular (picture) document has the property to show a dog, or does not have this property.

However, the computers need to apply algorithms, and the algorithms need to be specific to a particular property to be recognized. The algorithm can be specified by using machine-learning techniques with appropriate training data. For example, there can be training data that lets the computer distinguish pictures with dogs from pictures that do not show dogs. Usually, the training data would be a collection with dog pictures, and optionally a collection of no-dog-pictures.

Training data can be obtained by interaction with human users, in so-called supervised machine-learning. To stay with the dog example, human users can annotate a number of reference pictures as dog pictures and as no-dog pictures. In the example, the dog pictures are positive training samples (+) because they positively show the property "dog" (in general: correspondence with the property). The no-dog pictures are negative training samples (-).

Once a computer has been trained, it can recognize if a document has a particular document property (e.g., to be a dog picture) or not.

In principle, training the computer with reference data classified into (+) and (-) is possible for picture documents and for text documents. However, identifying (+) references can be time-consuming.

Further, picture documents with dogs are documents of the very specific category animal-picture documents. But many documents do not convey information in a single category, and providing training data for documents with multiple categories is more challenging.

Text documents can be more complex in processing than picture documents. Therefore, training to obtain rules for text documents can potentially take more time than training to obtain rules for picture documents.

Text documents have a further complexity for a number of reasons. For example, texts documents employ representations of real-world entities in different natural languages (a "dog" can be a "Hund", a "perro", a "sobaka" etc.), even with variation within the same language. To obtain a rule that - for example - identifies text documents (with "dogs") is more complicated than in the above picture example.

The rules could become complex even when the resulting rules are to be applied. Using training to obtain rules and using the rules to identify particular content is not a purpose on its own.

However, without training data there is no information of document properties. Also, quality and quantity of training data is critical for the selectivity of the computer to identify properties. Training the computer with an insufficient number of training samples (or the training the computer with training samples that do not correspond to the content to be detected) influences the selectivity of the computer in a non-desired way.

## Summary

According to embodiments of the present invention, a computer-implemented method for providing training data uses a sequence of method steps. The computer processes reference text documents by differentiating documents as a whole and sentences that are portions of the documents. Once training data is available, a differentiator module can identify a document property.

The computer receives (accesses) a first set of text documents (the document of a collection, or first document-set) as reference documents.

In a selecting step, the computer then applies two conditions (or criteria) in AND-relation to identify a second set (the candidate reference documents in the candidate set). Both conditions are binary conditions (YES/NO).

The topic condition is the attribute of a particular document to be related to a particular topic (or domain). The property condition relates to the attribute of a particular document to have a particular pre-defined lexical property (i.e. the existence of words that describe and represent a particular semantic meaning). In particular, the property condition is an argument condition, with the attribute that the particular document is an argumentative document.

It is noted that both conditions are orthogonal, i.e., independent from each other. The order of selecting (i.e. applying the selection conditions) does not matter. Optionally, the topic condition is applied before the argument condition. It is further noted that both conditions are also different in computation requirements. The topic condition can be implemented, for example, by ranking. A ranking tool receives one or more keywords to identify the topic and then checks for the occurrence of the keywords in documents. Thereby, the ranking tool applies actions such as determining values like inverse document frequency, term frequency, determining the length of a document, or other values. The actions can comprise calculations to process such values to derive ranking scores. In contrast, the property condition just checks for the occurrence a predefined number of keywords but without the determination of such values. Therefore the computational resources for both conditions are different.

In a classifying step the computer changes a set granularity from document to sentence and the computer forwards sentences (i.e. the sentences of the candidate reference documents in the candidate set) to a classifier module. Optionally, the classifier module can be implemented to be outside the computer. The computer receives the sentences of the documents (of the candidate set only). The classifier module classifies the sentences according to criteria related to the document property.

It is advantageous that the application of both conditions increases a property density that means the share of documents with a particular property. Applying the topic condition increases the density of documents belonging to a particular topic, and applying the property condition increases the density of documents being argumentative. Classification is thereby simplified.

A computer provides machine-learning training data for a differentiator module that is adapted to identify a document property. The computer receives a first set of reference documents with sentences. The computer uses a selector module to select a second set of reference documents, the candidate set being a sub-set with documents that comply with both a topic condition and an argument condition. In application to each reference document of the second set, a classifier module classifies the sentences into sentences either with a first sentence attribute or a second sentence attribute. The computer provides the training data for the differentiator module by providing the sentences with the first sentence attribute.

A computer program product that - when loaded into a memory of a computer and being executed by at least one processor of the computer - performs the steps of the computer-implemented method.

## Brief Description of the Drawings

FIG. 1 illustrates a computer system with a first computer and a second computer;
FIG. 2 illustrates writing conventions in a set granularity from document-sets, documents, sentences, and words;

FIG. 3 illustrates a sentence to show the concept of selecting applied to the set granularity of sentences and words;
FIG. 4 illustrates keyword sets that are references;
FIG. 5 illustrates the operation of a selector module that applies conditions to document sets;
FIG. 6 illustrates the operation of a classifier module;
FIG. 7 illustrates a flow-chart of a computer-implemented method for providing machine-learning training data for a differentiator module that is adapted to identify a document property;
FIG. 8 illustrates histograms for the number of candidate reference documents and the number of positive samples in training data;
FIG. 9 illustrates a diagram for with the number of positive training samples and the number of sentences in a candidate set, for the scenarios of FIG. 8; and
FIG. 10 is a diagram that shows an example of a generic computer device.

## Detailed Description

### Introduction

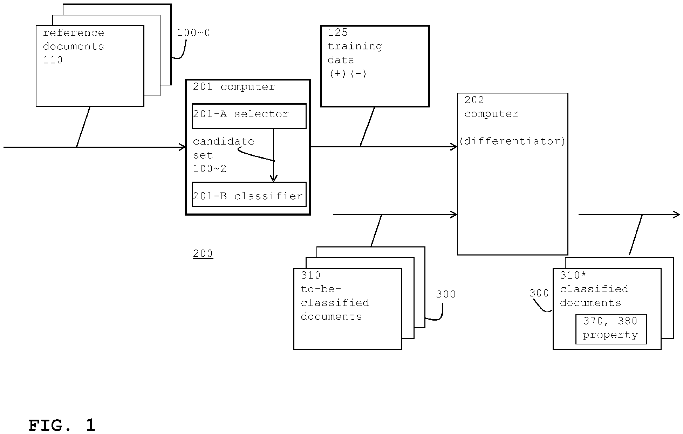

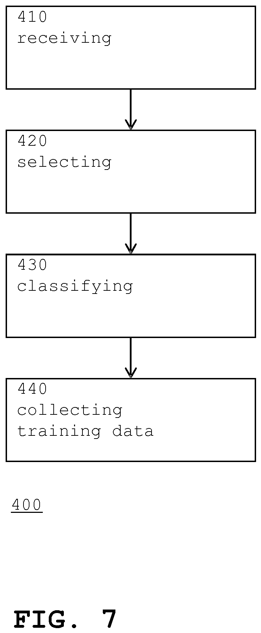

FIG. 1 illustrates computer system 200 with first computer 201 and second computer 202. First computer 201 receives reference text documents 110 (or "documents 110" in short) in document-set 100~0, performs the computer-implemented method (cf. FIG. 7) and thereby provides training data 125.

Training data 125 comprises training samples that are sentences. The training samples comprise positive samples (+) that correspond to document property 370 to be detected. The training samples can also comprise negative samples (-) that do not correspond to the property.

Second computer 202 receives training data 125 and is being trained. When training has been completed, second computer 202 receives to-be-classified documents 310 in document-set 300 and checks them for document property 370.

Therefore, documents remain documents, but to-be-classified documents 310 turn into classified documents 310*. As used herein, a classified document is a document for that property 370 has been established (i.e., the property available in the document, or absent). In other words, some of classified documents 310* have property 370, some of them do not. Classified documents 310* with property 370 belong to property-document-set 300* being a sub-set to document-set 300. Classified documents 310* without property 370 belong to a non-property-document set, being a sub-set to document-set 300 as well.

For an ideally operating differentiator module, both sub-sets are disjunctive and the union of both set-set corresponds to document-set 300*. Both sub-sets can be considered as document classes.

Second computer 202 uses a differentiator module (also known as "classifier"). Appropriate computer tools are known in the art. An example is described by Christian Stab et al. in the paper "Cross-topic Argument Mining from Heterogeneous Sources" (Proceedings of the 2018 Conference on Empirical Methods in Natural Language Processing, pages 3664-3674, Brussels, Belgium, October 31 - November 4, 2018). More in particular, chapter 4 of the paper illustrates the example in sub-section "Contextual BiLSTM (biclstm)". Also, US 10,013,470 B2 mentions machine learning algorithms such as Logistic Regression (LR), Support Vector Machines (SVM), Naive Bayes classifiers etc.

As used herein, the term "receive" can comprise that computer 201/202 gets access to a particular document 110/310 and/or to a particular set of elements (of the document). To-be-classified documents 310 can become available (for reading) at any point in time, even after training.

Computers 201 and 202 are illustrated separately, but they can be implemented by the same physical computer.

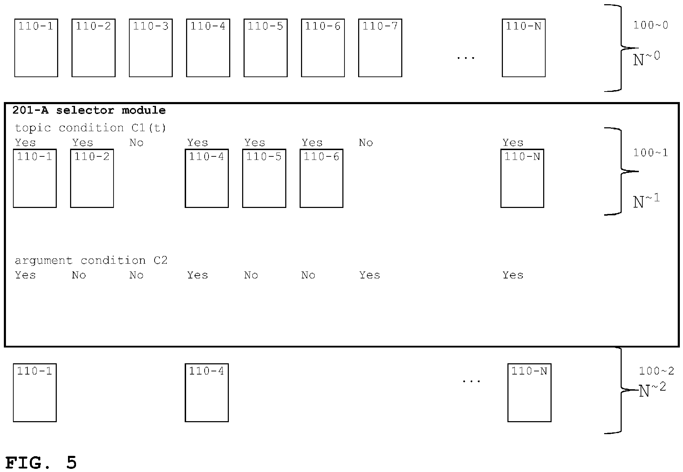

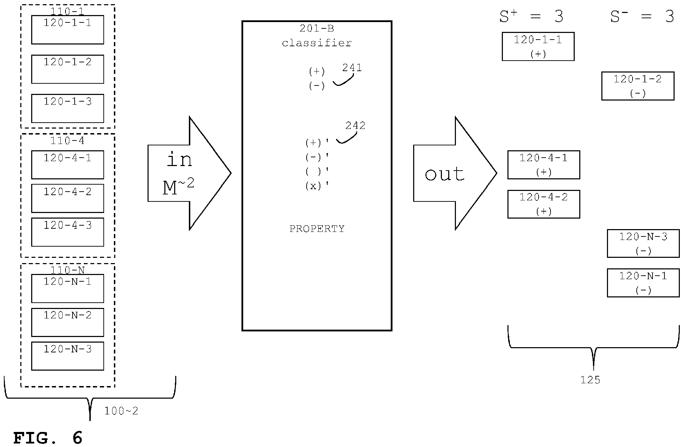

The following description focuses on the operation of first computer 201 to obtain training data 125 (illustrated bold). First computer 201 comprises selector module 201-A for selecting (cf. FIG. 5) and classifier module 201-B for classifying (cf. FIG. 6).

Classifying by module 201-B is considered to use computational resources in a quantity that can conflict with the above-mentioned time-constraint. There are at least two approaches to address these constraints:

- selecting (to enhance density, by the selector module), and
- set cardinality limitation to pre-defined numbers (e.g., as a parameter used by the selector module).

Therefore, selector module 201-A communicates to classifier module 201-B not document-set 100~0, but candidate set 100~2 with a lower number of documents.

With details explained below, selector module 201-A selects some documents (from document set 100~0) and thereby disregards other documents. The share (also called "density") of documents with a particular property thereby rises. An example is the property density: the share of documents with a particular property in a document set. It is desired that the property density rises from document set 100~0 to candidate set 100~2. Such an increase is advantageous for classifier module 201-B, because the efficiency to obtain training data rises with the property density. It is noted that the property is not yet known to selector module 201-A.

**Property being arguments**

In the following, the description explains document property 370 by way of example, for the document property ARGUMENT. As used herein, an argument is a sentence in a text document, wherein the sentence expresses evidence (or reasoning) that can be used (by the reader of the sentence) to either support (or oppose) a given topic.

Regarding topics, the description uses much simplified examples. The topics are identified by topic index (t). Examples use texts in quotation marks. The examples relate to

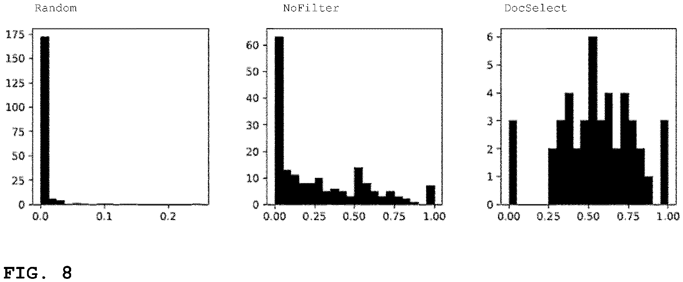

- a much simplified theoretical example with text documents in topic (0), and
- to experimental examples, in topics (1) to (4), with results discussed below (FIGS. 8-9).

In the theoretical example, arguments are related to topic (0) "pet animals". In the experimental examples, the arguments are related to the following topics: (1) "abortion", (2) "cloning", (3) "marijuana legalization", and (4) "minimum wage".

Regarding support of a given topic (or opposition to a given topic), the arguments expresses evidence (or reasoning) support or oppose the topic, by comprising "positive" or "negative" terms, by comprising "pro" or "contra" terms etc.

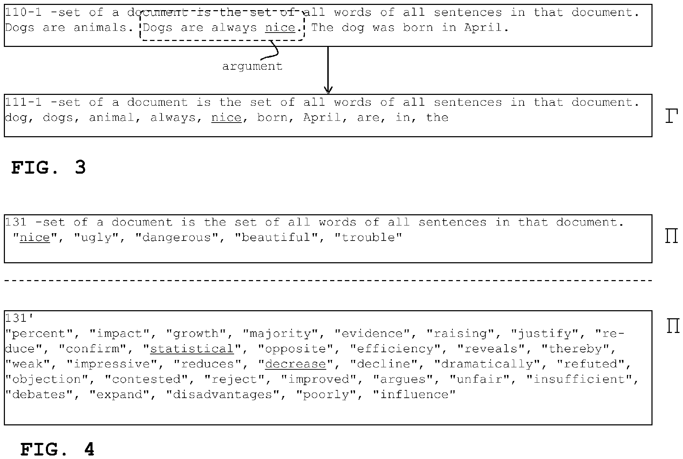

In the theoretical example, the sentence "Dogs are always nice" (cf. FIG. 3) belongs to topic (0) and comprises a support/oppositions statement "nice". This sentence is therefore an argument. A document that comprises this sentence is therefore a document with property 370 to comprise arguments in favor of dogs. Computer 201 would provide this sentence to computer 202 as a positive training sample (+) to check for documents with that property 370. Since the differentiator module in computer 202 is being trained with this (+) sentence (and with other sentences in set $S^+$), a to-be-classified document 310 with, for example, "It is nice from you to keep a dog" would be classified into property-document-set 300* (i.e., the documents that comprise arguments in topic (0).

In the experimental example, documents in property-document-set 300 document class are documents that comprise an argument regarding (1) "abortion" and documents in the second document class do not.

Classification is not limited to a yes/no property.

In a first classification granularity, document property 370 indicates if a particular document 310 has a particular property 370 or not (e.g., comprising arguments for a particular topic, or not), as explained.

In a second classification granularity, property 380 is an additional (and therefore optional) property. Property 380 also indicates if a particular document 310 comprises content with arguments relating to the particular topic, but further indicates an argument direction. In other words, the statement (property 370) is enriched by further binary classes. The first document class is further divided according to argument direction, with sub-classes in the sense of "support"/"oppose", "positive"/"negative", "pro/contra" etc. For example, the first document class (with documents that comprise arguments regarding (1) "abortion") comprises a sub-class "pro" and a sub-class "contra". Some topics are discussed sometimes in controversy. However, controversy detection is just an example for explanation.

Other topics could be (5) "self-healing materials", (6) "nuclear energy", or (7) "crypto currency".

The topics are merely provided for explanation. In principle, the classes (and optionally sub-classes) can be derived from processing the text of the documents. The categories for the examples are taken because they are easy to be explained.

In the theoretical example, documents in combination can indicate a result statement, and the result statement could be a number (or share) of documents in the class (i) "pet animals have a positive value" or in the class (ii) "pet animals have negative value". The above challenges for natural languages (different languages, different terms etc.) further prevail.

**Activity Property**

In further practical applications, to-be-classified documents 310 convey information that has to be provided at the output of computer 202 within a relatively short time frame (after receiving documents 310). There can be several reasons for such time-constraints: For example, the output data of computer 202 can trigger activities, but the to-be-classified documents 310 can be available in such a quantity that humans can't review them within relatively short time frames. Therefore, using computer 202 becomes mandatory. In view of that, properties 370 (optionally 380) can be regarded as activity properties. The properties can be used to support decisions to be applied to the operation of technical systems.

To illustrate a first example for activity properties, documents 110/310 are assumed to be documents in relation to technical equipment situated in an industrial site, such as in a factory. The documents can be created by user input (as by a ticketing system that collect malfunction data) or created by the equipment itself. Document property 370/380 can be an importance classification of such a message (in the ticketing system) that collects data regarding malfunction in an industrial context. The importance can be classified according to the function or malfunction of one or more technical systems. Therefore, property 370/380 represents technical system status. Similar as with the arguments, there is a distinction into "topic" (such as type of equipment) and "support" (such as operation modes of the equipment).

There are technical considerations for this approach. For example, in case of a deviation (i.e. a particular operation mode of the equipment) it is required to locate the root-cause of the deviation. Assuming that communication between equipment uses radio communication (e.g., through WLAN or the like), a further topic (8) could be "wireless communication" being the type of equipment. Identifying areas within the site in that radio communication is disturbed (i.e. abnormal operation mode) provides status information regarding the operation of the industrial site being a technical system.

To illustrate a second example for activity properties, documents 110/310 are report documents that contain data from road vehicles. The information to be derived (in the result statement at the output of computer 202) could be a likelihood percentage of traffic congestion in a particular geographical area (topic (9)). The streets and the vehicles could also be regarded as a technical system for that the information is status information, such as traffic congestion or not (corresponding to "support", in this case a particular operation mode of the traffic system).

To summarize the activity properties, users (of computer 202) can than derive recommendations to act with the technical system, for example, to repair the WLAN in the particular area (first example), or to take alternative routes that bypass the congestion (second example). The description focuses on properties being arguments, but the person of skill in the art can apply the teachings likewise, by simply taking operation mode conditions instead of argument conditions. Operation mode conditions enable the computers to identify operation mode as status information (being property 370/380).

**Writing conventions**

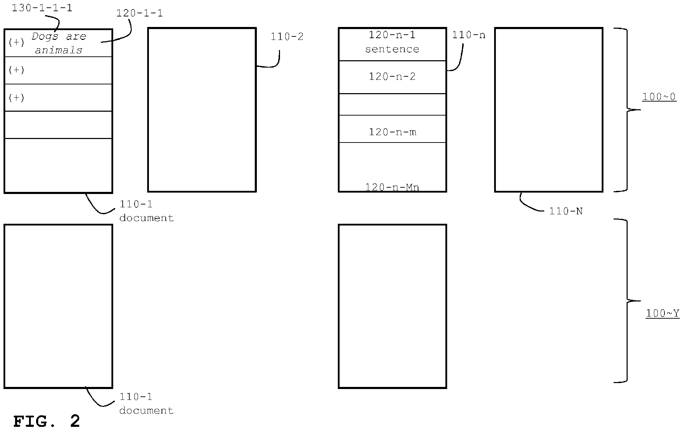

FIG. 2 illustrates writing conventions in a set granularity from document-sets 100, documents 110, sentences 120, and words 130.

The granularity is arranged in hierarchy with elements belonging to sets (or pluralities). Document-set 100 is a set of elements that are documents 110. Document 110 is a set of elements that are sentences 120. Sentences are sets of elements that are words. Word 130 is a set of elements that are characters (such as A, B, C).

References 100, 110, 120, 130 can have indices, wherein lowercase letters (n, m, k) stand for intra-set indices and uppercase letters (N, M, K) stand for set cardinalities (or overall numbers of elements in the set). It can be assumed that the sets have at least two elements. However, this is not required. There can be single-sentence documents, single-word sentences, and single-character words.

Occasionally, sets will be noted by uppercase Greek letters $\Gamma$ and $\Pi$, and set cardinalities will be indicated by vertical bars $\|$. For example, $|\Gamma|$ is the (positive) integer number that represents the cardinality of $\Gamma$ (i.e. the number of its elements).

Documents 110 are reference documents (cf. FIG. 1), but in principle the intra-document hierarchy (sentence 120, word 130) and extra-document hierarchy (document-set 100) is applicable to to-be-classified documents 310 (cf. FIG. 1) as well.

As illustrated in the row at the top of the figure, document-set 100~0 comprises documents 110-1 to 110-N, and set 100~Y is sub-set comprising some of these documents. In general, Y is a set identifier that indicates the number of selection conditions C1(t), C2, etc (AND-related conditions) from document-set 100~0. Set 100~1 is a sub-set of set 100~0 and comprises the documents from document-set 100~0 according to (a number of) Y = 1 condition. Set 100~2 is a sub-set of document-set 100~0 and comprises the documents from document-set 100~0 according to Y=2 conditions, and so on. The sign - does not have special meaning. It is just a separator between reference 100 and set-identifier Y.

Occasionally, the description adds the - notation to documents, sentences and words that belong to documents of a particular set.

Technically, the selection of sub-sets (e.g., from document-set 100~0) can be implemented by computer 201 (cf. FIG. 1) by

- retrieving documents from a database that stores documents
- annotating documents (of a set)
- using indices (e.g., for the document in a given set), such as database indices that allow the identification of particular documents.
- moving documents within database structures (e.g., storing particular document-sets in particular database tables)

As also illustrated in the row above, documents 110 can be distinguished among each other according to document index n, into documents 110-1, 110-2, 110-n, and 110-N, with N being the document cardinality in document-set 100~0.

As used herein, selecting set 100~1 (from document-set 100~0) keeps the indices n unchanged. This is convenient for explanation, but computer 201 can re-assign indices.

As illustrated for document 110-n only, each document has sentences 120-n-1, 120-n-2, 120-n-m, 120-n-$M_n$, identified by sentence index m. A sentence number $M_n$ (sentence cardinality) is countable for each document 110-n. In the simplified example, a sentence is a string of words ending with a period character. The person of skill in the art can apply other definitions. An alternative approach is explained in the following paper: Reynar, Jeffrey C, et al. "A Maximum Entropy Approach to identify Sentence Boundaries", ANLC '97 Proceedings of the fifth conference on Applied natural language processing, Pages 16-19, Washington, DC, March 31 - April 03, 1997.

As illustrated for document 110-1 only, the sentences have words 130, illustrated in sentence 120-1-1 "Dogs are animals" for the example of word 130-1-1-1 ("dogs"). The word cardinality $K_{mn}$ is countable for each sentence (m) in each document (n). In the example, for sentence 120-1-1, the cardinality is $K_{11} = 3$.

Example document 110-1 has (at least) the following sentences 120 ($M_1$ = 3 sentences):

| | |
|---|---|
| 120-1-1: | "Dogs are animals." |
| 120-1-2: | "Dogs are always nice." |
| 120-1-3: | "The dog was born in April." |

Example document 110-2 has (at least) the following sentences ($M_2$ = 4):

| | |
|---|---|
| 120-2-1: | "Dogs are animals." |
| 120-2-2: | "Dogs eat meat." |
| 120-2-3: | "The food is tasteful." |
| 120-2-4: | "Drinking water" . |

Example document 110-3 has (at least) the following sentences:

| | |
|---|---|
| 110-2-1: | "Elephants are large animals." |
| 110-2-2: | "An elephant lives in the zoo." |
| 110-2-3: | "The zoo is located in the city of D." |

The examples are much simplified, and in real document sets (or collections), the numbers N, M and K are much higher. For example, the European patent office has published more than 3.000.000 patent applications in its public databases. The applications would lead to N = 3.000.000 documents 110. Paragraphs and/or claims could be regarded as sentences 120.

Numbers can be summed up across the set granularities. For example, document-set 100~0 has N documents, and has $M^{\sim 0} = M_1 + M_2 + M_n + ... + M_N$ sentences. (The superscript notation -0 (~Y in general) identifies the set of document that comprises the sentences.

### Pre-processing

For the experimental examples, document-set 100~0 was derived (by pre-processing) from Common-Crawl, a web-corpus collection of heterogeneous web documents which has been collected in 2016 (http://commoncrawl.org). More in detail, http://index.commoncrawl.org leads to collections of data from websites. In the example, the collection "CC-MAIN-2016-07" was used.

Pre-processing a plurality of documents into document-set 100~0 comprises, for example, the following:

- removing the html-markup (the so-called boilerplate) of the web documents, by standard techniques such as, for example, justext (http://corpus.tools/wiki/Justext);
- splitting documents 110 into sentences 120 and words 130, so that the computer can handle sentences and words separately (with technologies such as the Natural Language Toolkit (NLTK) framework www.nltk.org) and/or Apache OpenNLP;
- Annotating document, sentences or words according to
- disregarding documents without sentences;
- removing sentences having a threshold exceeding number of words (e.g., 50 words as maximal K);
- removing sentences without verbs; and
- removing pictures that may be associated with the documents.

## Density

FIG. 2 is convenient to illustrate the concept of density, indicating the share of elements (of a set) having a particular attribute in relation to the cardinality of the set.

In other words, the elements of a (main) set can be marked to have a particular attribute, and the marked elements belong to a sub-set. The density is the ratio between the cardinality of the sub-set to the cardinality of the (main) set.

In the theoretical example, in case that computer 202 (cf. FIG. 1) would have to be trained to recognize documents 110 that belong to the topic "dog", the sentences 120-1-1, 120-1-2, 120-1-3, 120-2-1 and 120-2-2 would be the (+) samples (because they have the attribute to contain "dog").

A document-specific density can be defined as the number $M^+$ of (+) sample sentences 120 in relation to the overall number M of sentences 120 in document 110. In the simplified example, document 120-1 has the $M^+/M$ density 100% (all sentences comprise "dog"), document 120-2 has the $M^+/M$ density 50% (2 sentences with "dog", 4 sentences in total) and document 120-3 has the $M^+/M$ density 0%. For a different topic, the densities would be different.

Densities can also be defined between the cardinalities of other sets. For example, a measure for the efficiency (to operate computer 201) is the argument density as the radio of sentences (that are arguments) versus the number of sentences of a set of documents. The argument density is measured for a set of documents, but not for particular documents.

## Word sets

FIG. 3 illustrates a sentence to show the concept of selecting applied to the set granularity of sentences and words. A word set 111 of a document 110 is the set of all words 120 of all sentences 130 in that document 110. Or in other words, a word set of a document is a list of the words that occur in the document. This is illustrated for the example of document 110-1 with M = 3 sentences.

Word set 111-1 comprises words ("dog", "dogs", "animal", "always", "nice", "born", "April", "are", "in", "the") that occur in document 110-1. Identifying the words is also called tokenizing. For convenience, so-called stop-words ("are", "was" etc.) can be left out, and the difference between singular and plural can be ignored. The number of occurrences does of a particular word not matter. The alternative notation for the word set is $\Gamma$, or $\Gamma_n$ (with the document index).

In other words, word sets are collection of words belonging to a particular document.

## Keyword sets as reference word sets

FIG. 4 illustrates keyword sets 131 and 131' that are references: pre-defined sets of words 130 to be used as a reference. The figure also indicates the alternative notation $\Pi$.

As used herein, the keywords are argumentative keywords that indicate the presence of arguments in documents 110. A direction sense of arguments (cf. the second classification granularity) such as "beautiful" in opposition to "ugly" does not matter. If used as argumentative keywords, the keywords are topic-invariant (i.e. without index (t)). (More in general, the keywords are property keywords that indicate the representation of properties in documents 110.)

Set 131 is for the theoretical example (0), and set 131' is for the experimental examples (1)-(4).

The keyword cardinality $\Pi$ is the overall number of words per keyword set (e.g., $|\Pi| = 5$ for set 131, and $|\Pi| = 33$ for set 131').

## Keyword occurrence

Looking at word set 111-1 (FIG. 3, derived from document 110-1, or more general 110-n) and keyword set 131 (FIG. 4), the word "nice" occurs in both sets.

More in general, the set intersection $\cap$ of word set $\Gamma_n$ with keyword set $\Pi$

$$\Gamma_n \cap \Pi$$

comprises the words that are common in both sets.

Looking at the attributes, word set 111-1 (and therefore document 110-1, generally document 110-n) has the attribute that the set intersection is not empty. For convenience, the figures illustrate the common word in underscoring. In the example, the cardinality is one. (i.e. $|\Gamma n \cap \Pi| = 1$).

For the phrase "a statistical decrease of the wage ..." (cf. experimental example of topic (4)), there are two words in common with set 131', with the cardinality $|\Gamma_n \cap \Pi| = 2$.

For the following, the keyword occurrence number Key_n of a particular document 110-n is defined as the cardinality of the set intersection of words set 111-n (that is derived from the particular document) with keyword set 131/131'.

$$Key\_n = |\Gamma_n \cap \Pi|$$

Since the keywords are topic related, the keyword occurrence number (of a particular document) depends on the topic: Key_n(t).

### Selecting / Filtering

FIG. 5 illustrates the operation of selector module 201-A that applies the topic condition and the property condition to document sets.

Selector module 201-A receives document-set 100~0 and applies a topic condition C1(t) to select the documents of set 100~1. In the example, set 100~1 comprises documents 110-1, 110-2, 110-4, 110-5, 110-6 and 110-N because these documents comply with the topic condition C1(t). The topic condition C1(t) allows computer 201 to select documents that are related to a particular topic (t). 100~1 can be considered as an intermediate set.

Selector module 201-A applies the argument condition C2 to set 100~1 to select the documents of set 100~2. Set 100~2 comprises documents 110-1, 110-4 and 110-N. The argument condition allows selector module 201-A to select documents that comprise argumentative language (cf. FIG. 4).

Set 100~2 is the output of selector module 201-A, and the input to classifier module 201-B (cf. FIGS. 1 and 6). As mentioned, the input of classifier module 101-B is also called the "candidate set" of documents.

It is possible to implement selector module 201-A for parallel operation.

Set 100~1 is a sub-set of set 100~0, and set~2 is a sub-set of set 100~1. Looking at the cardinalities, set 100~0 comprises $N^{\sim 0}$ documents, set 100~1 comprises $N^{\sim 1}$ documents, and set 100~2 comprises $N^{\sim 2}$ documents, with $N^{\sim 2} < N^{\sim 1} < N^{\sim 0}$. As the cardinalities are decreasing, the selection by selector module 201-A can be regarded as filtering.

Some of the documents comprise sentences with arguments, and classifier module 201-B will identify them as positive samples (+). Filtering enhances the density of such positive samples, the argument density.

Since both conditions C1(t) and C2 are applied consecutively, a document from document set 100~0 (at the input) is also a document in sub-set 100~2 (at the output) if it complies with C1(t) AND C2. As mentioned, the order of condition application does not matter.

Both conditions will now be explained with further detail.

### Topic Condition C1(t)

As used herein, a particular document 110-n complies with the topic condition C1(t) if it belongs to a particular topic (t). Identifying the topic of a document is known in the art, so that the description uses examples: For example, a particular document complies with the topic condition if at least one word is an element of a topic word set or comprises a pointer to a particular topic. For example, such as topic word set can comprises "dog", "cat", "canary", "rabbit", "doLnkey", for topic (0).

For example, a particular document can comply with the topic condition C1(t) if it has been classified to a particular topic (e.g., a patent document with an IPC-class). Rules to identify domains are available by collections of terms, in glossaries or the like.

For example, selector module 291-A can create a database index for documents 110 in document set 100~0. Indexing tools are well known in the art. For example, the tool Elasticsearch (explained at www.elastic.co) can be used. Selector module 201-A can then rank (or score) the documents 110-1, 110-2, 110-n and 110-N (cf. FIG. 2) in document set 100~0 with respect to relevance to a given topic (t). Ranking tools are known in the art, and Okapi BM25 is just given as an example for such a tool. BM25 is explained by Robertson, Stephen E. et al. Okapi at TREC-25. Proceedings of the Third Text REtrieval Conference. NIST, pages 109-126.

The cardinality N of document-set 100~1 can be limited to a cardinality parameter X. Since the number of subsequence instances of processing step (property condition C2 in selector 201-A, classifier 201-B), X scales to the computing resources for the subsequent steps (such as processing time, memory consumption). Parameter X can be pre-defined, and the person of skill in the art can select X in view of the resources that are available.

### Property Condition C2

As used herein, a particular document 110-n complies with the property condition if its keyword occurrence number Key_n(t) is in a pre-defined relation a predefined match parameter p. For example, the relation is a magnitude relation to a parameter that is a threshold value.

$$C2 \text{ if } Key\_n(t) \geq p$$

In the theoretical example (for the dog topic (0)), parameter p is set to p = 1. In other words, at least one common word indicates YES.

In the experimental examples (topics (1) to (4), parameter p was set to p = 2, so that at least two common words are required. FIG. 5 illustrates the documents that comply with the property condition: documents 110-1, 110-4, 110-7 and 110-N. The other documents are "no" documents (for that the KeyDen(n) was too small).

### Set Granularity Chance and Accuracy

Selector module 101-A (cf. FIG. 1) identifies documents 110 that comply with both conditions C1(t) and C2 (to set 100-2), and classifier module 101-B processes documents 110 further, separately for the sentences 120 of documents 110. Classifier module 101-B will turn sentences 120 that comprise arguments into training data 125 (cf. FIG. 1), not all of them. Due to the selection (or filtering to 100-2), there are only documents that contain arguments (according to condition C2).

Document 110 (in set 100~2, that complies with the argument condition) potentially comprises a sample sentence 120 that can be used as (+) training sample, or as a (-) training sample.

- Document 110 may comprise a sentence with the above phrase "a statistical decrease of the wage ...", and the (complete) sentences could become a training sample (for computer 202) to identify topic (4)/negative arguments.
- Document 110 may comprise the phrases such as "a statistical calculation was performed ..." and - a coupled of sentence away - "a rain decrease was detected". The sentences would not usable to for topic (4)/negative arguments.

However, the share of sentences that could become training samples (+)(-) has increased by the selection. This can be advantageous for the next module - the classifier module - that actually derives the training data. Also, the quality and quantity of samples (in the training data) is expected to improve.

**Classifier Module**

FIG. 6 illustrates the operation of classifier module 201-B. Module 201-B receives the sentences 120 of the documents 110 in candidate set 100~2 and provides training data 125 (for machine-learning), with at least $S^+$ positive samples (+). In view of the above definition, the positive samples (+) are arguments. Documents 110 are illustrated by dashed lines only, because there is no need for module 201-B to differentiate the documents.

The figure is simplified by assuming that documents 110 each have K = 3 sentences only (as in the example of FIG. 3). It is noted that conditions C1(t) and C2 have nothing to do with the above result statement (at the output of computer 202 indicating property 370, optionally 380).

Taking the theoretical example, the figure illustrates the sentences of candidate set 100~2 (cf. FIG. 5) are the input:

> 120-1-1, 120-1-2, 120-1-3 (from document 100-1, dashed)
> 120-4-1, 120-4-2, 120-4-3 (from document 100-4, dashed)
> 120-N-1, 120-N-2, 120-N-3 (from document 100-N, dashed)

In the example, number $M^{\sim 2}$ is the number of sentences of the documents that belong to set 100~2. In the example $M^{\sim 2}$ = 9.

In a first classification granularity 241, classifier module 201-B operates with two different classifications, or sentence attributes:

> (+) first sentence attribute (positive sample, or positive sentences):
> the sentence is related to topic (t) and comprises an argument
> (-) second sentence attribute (negative sample, or negative sentences):
> the sentence is not related to topic (t), or does not comprise an argument

The assignment of (+) or (-) depends on the PROPERTY statement (to be obtained by computer 202, e.g., to be-classified document 310 has the PROPERTY to comprise an argument for a topic (t), or not).

The assignments can be counted. As used herein, the $S^+$ stands for the number of positive sentences (i.e., cardinality of the set of 125(+)), in the much simplified example of FIG. 6, $S^+$ = 3 (sentences 120-1-1, 120-4-1, 120-4-2). $S^-$ stands for the number of negative sentences ($S^-$ = 3 in the simplified example).

The sentences with the first attribute become training data. In addition to that, the person of skill in the art can also use sentences with the second attribute, but with a lower share (i.e., $S^- < S^+$).

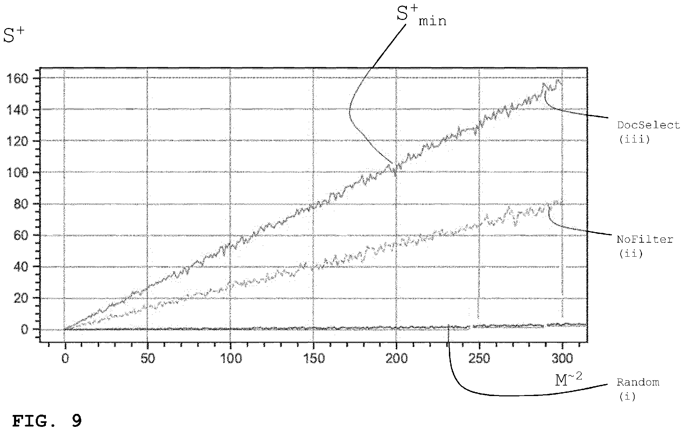

Depending on the type of computer 202 (to be used, cf. FIG. 1), the number $S^+_{min}$ of positive samples (in training data 125) has a minimal number $S_{min}$. In the experiments discussed below, the minimal number $S^+_{min}$ was 100 (cf. FIG. 9).

The ratio $S^+ / M^{\sim 2}$ indicates efficiency of classifier module 201-B. Generally, the ratio be considered as a property density, or more in particular, an argument density.

Classifier module 201-B can also be regarded as an annotation module. It is advantageous that selector module 201-A has disregarded (i.e. not selected, or filtered out) documents that do not comply with conditions C1(t) and C2.

At the output, classifier module 201-B provides training data 125 with a first training set with the sentences assigned to (+), and with a second training set with the sentences assigned to (-). The figure shows 3 sentences in each training set $S^+$ = 3 and $S^-$ = 3, but these relatively low numbers are the result of the simplification.

In a second classification granularity 242, classifier module 201-B operates with 4 different classifications, with one of the four classes to be assigned per sentence:

> (+)' (the classifier agrees with the above binary classification of the argument direction)
> (-)' (the classifier dis-agrees with the above binary classification)
> ()' (standing for situations in that the classifier can't decide)

(x)' (standing for exclusively either (+)' or (-)'

The assignment of (+)', (-)', ()' or (x)' also depends on the PROPERTY statement (to be obtained by computer 202).

The second classification granularity can be considered to be sub-ordinated to the first classification granularity, with (+)' element of (+), (-)', ()' and (x) element of (-).

Numbers $S^+$, $S^-$, $S$, $S^x$ can be counted accordingly.

Classifier module 201-B uses the result statement as a criterion. Much simplified, classifier module 201-B could be implemented by a computer interacting with human experts that are confronted with the sentences (from candidate set 100~2). The expert user can input a classification for the sentence, for example, with a user interface that presents the classifications (+)', (-)', ()' and (x)' and that lets the expert user choose one of the classifications.

For example sentence 120-1-2 "dogs are nice", the expert would agree, so classifier module 201-B would classify to (+)' as the result. For a sentence "my dog is very polite but forces me to let him out four times a day", there would be a (x)'. For "dog food is delicious" the class would be ()', and "police ordered an aggressive and dangerous dog to die ..." would be (-)'.

**Discussion**

The above-explained selection approach with the two conditions is considered to have advantages:
In view of the above introduced density, the application of conditions C1(t) and C2 increases densities. Applying C1(t) increases the density of documents belonging to a particular topic (t), and applying C2 increases the density of documents being argumentative (increasing the argument density).

It is noted that classifier module 201-B would not receive sentences from documents that fail any of the above conditions. In the example, a sentence with the "elephant" and the zoo location etc. are not received (unless the document contains both "dog" and "elephant"). This can be advantageous in terms of computation resources (and in case of human expert interaction), the computer (or human as the case may be) would process a relatively small number of sentences instead of a relatively large number of all sentences in all reference documents.

Classifying sentences (that result from un-filtered documents) would lead to a histogram distribution with a relatively high share of ()'. The classes ()' would have to be filtered out by classifier 201-B, a task to be avoided for such a share.

The impact of homonyms (or synonyms) in different domains can be minimized: classifier module 201-A would process such terms in a single domain so that the term has a single meaning. To take an example for German-language documents, for example, a "Schimmel" (in topic (0)) is a white horse, with a potentially "positive" connotation, but a document from a food topic with "Schimmel" (mold/fungus) would fail at least the property condition and would not appear (as sentences) at the input of classifier module 201-B.

Further, while a single document comprises a set of sentences (N), the document can comprise multiple statements that would be classified differently, but the classification in view of the sentences provide higher accuracy.

**Activity property and operation mode condition**

The description has focused on arguments, but - for documents relating to industrial or traffic systems - the operation mode is more of interest. The operation mode indicates the status of the technical system. Instead of argument conditions C2, computer 201 can use operation mode conditions as property condition C2. Also, "being argumentative" can be replaced by "relating to the operation mode of the technical equipment".

**Method**

FIG. 7 illustrates a flow-chart of computer-implemented method 400 for providing machine-learning training data 125 for differentiator module 202 that is adapted to identify a document property 370.

In receiving step 410, computer 201 receives a first set 100~0 of reference documents 110-n. As explained, reference documents 110-n have sentences 120-n-k~0.

In selecting step 420, computer 201 selects second set 100~2 of reference documents 100-n~0. Second set 100~2 is a sub-set of first set 100~0 and comprises reference documents 100-n that comply with both conditions C1(t) and C2. As mentioned, the reference documents 100-n~2 of sub-set 100~2 are candidate reference documents.

Condition C1(t) is the topic condition, and condition C2 is the property condition with a pre-defined keyword set 131/131'. (The property condition can be, for example, the argument condition or the operation mode condition). The details for both conditions had been explained above.

In application to each reference document 110-n of second set 100~2, computer 201 uses classifier module 201-B, to perform classifying step 430. Module 201-B classifies the sentences 120-n-k~2 of each reference document 110-n~2 into sentences either with the first sentence attribute (+) or the second sentence attribute (-).

In providing step 440, computer 201 provides training data 125 for the differentiator module 202 by providing the sentences with the first sentence attribute (+).

Optionally, wherein selecting step 420 is performed for the property condition C1 with ranking documents 110-n in the first set (100~0) with respect to a given topic (t). Selecting step 420 can be performed for topic condition C1 with ranking documents 110-n in first set 100~0 by indexing with an Okapi BM25 tool.

Optionally, selecting step 420 is performed for property condition C2 by checking if a keyword occurrence number Key_n(t) is in a pre-defined relation to pre-defined match parameter p. Optionally, the pre-defined relation is a magnitude relation to the match parameter that p is a threshold value.

Optionally, in classifying step 430, computer 201 classifies sentences 120-n-k into sentences with either a first sentence attribute (+) or a second sentence attribute (-), wherein the first attribute (+) is assigned to sentences that belong to the topic and that comprise arguments.

Optionally, computer 201 provides 440 the training data also with sentences having the second sentence attribute (-). The share of the sentences with the second sentence attribute (-) is smaller than the share of the sentences with the first sentence attribute (+).

FIG. 7 also illustrates a computer program or a computer program product. The computer program product - when loaded into a memory of a computer and being executed by at least one processor of the computer - performs the steps of computer-implemented method 400. So in other words, the blocks in FIG. 7 illustrate that method 400 can be implemented by computer 201 (cf. FIG. 1) under the control of the program.

## Experiments

FIG. 8 illustrates histograms for the number of candidate documents and the number of positive samples (i.e., sentences (+) in training data 125), as a result of operating classifier module 201-B (cf. FIG. 6).

The number N~0 of documents in document set 100~0 was limited to X = 50.

There are histograms for the following scenarios:

- Random scenario (i), with the candidate documents in set 100~2 (at the input of module 201-B) selected at random, $N^{\sim 2}$ documents, with without applying conditions C1(t) or C2
- NoFilter scenario (ii), with $N^{\sim 2}$ candidate documents (at the input of module 201-B) corresponding to set 100~1, so that only condition C1(t) has been applied.
- DocSelect scenario (iii), with $N^{\sim 2}$ candidate documents (at the input of module 201-B) selected by applying conditions C1(t) and C2, as described.

In the scenarios, the $N^{\sim 2}$ cardinalities are the sum of the cardinalities for topics (1) to (4). It is noted that due to the selection, the number $M^{\sim 2}$ of sentences (in the $N^{\sim 2}$ documents) may vary between the scenarios.

For classifier module 201-B, the first classification granularity 241 (cf. FIG. 6) with (+) and (-) was used. At the output of classifier module 201-B, the number of positive samples 125 (+) (the sentences with relation to topic (t) and with arguments) had been counted per document and grouped according to the number of positive samples (+) per document.

In the Random scenario, approximately 175 documents are without positive sample (+), the argument density was 0.0.

In the NoFilter scenario, approximately 60 documents are without positive sample (+), the argument density was 0.0. This is an improvement.

In the DocSelect scenario, approximately 3 documents are without positive sample (+), the argument density was 0.0.3 documents are at argument density 1 (100%). The majority of documents has argument densities (arguments per document) from 0.25 to 0.75. In the 6 documents with density 0.5, in average every second sentence (+) comprises an argument. This is further improvement.

The Y-axis shows the number of candidate documents 110 at the input of classifier 201-B.

## Experiments (continued)

FIG. 9 illustrates a diagram for with the number of positive training samples (+) and the number of sentences 120 in candidate set 100~2, for the three scenarios of FIG. 8 (with graphs (i), (ii) and (iii).

Ratio $S^+ / M^{\sim 2}$ is the argument density. As graphs (i) and (ii) are approximate to the straight line, it can be seen that the argument density is a linear factor (at least if condition C1(t) was applied)

Assuming that computer 202 requires the minimum number $S^+_{min}$ = 100, the random scenario (i) did not result in a suitable training set (at least not yet for the $M^{\sim 2}$ = 300 sentences at the input of classifier module 201-B). For the NoFilter scenario (ii), there is an expectation that $S^+_{min}$ can be reached with a couple of 100 more reference documents 110 to be processed. For the DocSelect scenario (iii), with the application of both criteria C1(t) and C2, $S^+_{min}$ was reached with approximately 200 sentences (of the documents in set 100~2).

In other words, the argument density $S^+ / M^{\sim 2}$ (i.e. arguments among the sentences of the documents of set 100~2) is sufficiently high of scenario (iii). Taking the cardinality limitation X = 50 documents (in set 100~0) into account, the random selection in (i) misses the sentences that are arguments, but the application of the conditions in (iii) increases the number of arguments (i.e. increases the argument density in set 100~2).

## Generic computer

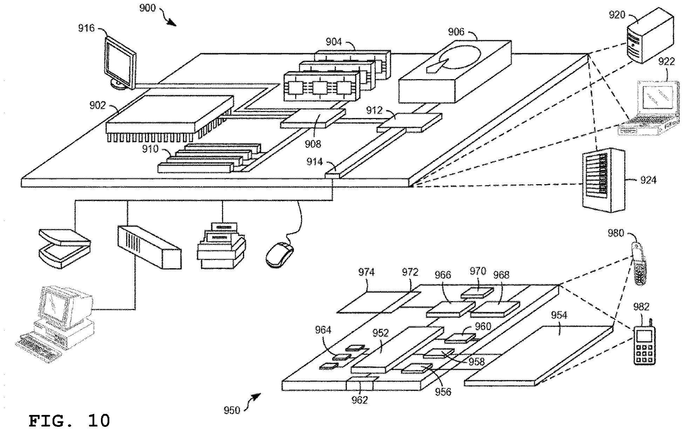

FIG. 10 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Generic computer device may 900 correspond to the computer system 200 of FIG. 1, or to computers 201/202 of that system. Computing device 950 is intended to represent various forms of mobile devices, such as personal digital assistants, cellular telephones, smart phones, and other similar computing devices. For example, computing device 950 may include the data storage components and/or processing components of devices as shown in FIG. 1. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the spirit and scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

**Claims**

1. Computer-implemented method (400) for providing machine-learning training data (125) for a differentiator module (202) that is adapted to identify a document property (370), the method (400) comprising:

   receiving (410) a first set (100~0) of reference documents (110-n~0), the reference documents (110-n) with sentences (120-n-k);
   selecting (420) a second set (100~2) of candidate reference documents (100-n~2), wherein the second set (100~2) is a sub-set of the first set (100~0) and comprises reference documents that comply with both a topic condition (C1(t)) and a property condition (C2); wherein the topic condition (C1(t)) is defined by the relation to a particular topic, and wherein the property condition (C2) is defined by a pre-defined keyword set (131/131') and a keyword occurrence number (Key_n(t));
   in application to each candidate reference document (110-n~2), by a classifier module (201-B), classifying (430) the sentences (120-n-k~2) of each candidate reference document (110-n~2) into sentences either with a first sentence attribute (+) or a second sentence attribute (-); and
   providing (440) machine-learning training data (125) to the differentiator module (202) by providing the sentences with the first sentence attribute (+).

2. Method according to claim 1, wherein selecting (420) is performed for the topic condition (C1) with ranking the documents (110-n~0) in the first set (100~0) with respect to a given topic (t).

3. Method according to claim 2, wherein selecting (420) is performed for the topic condition (C1) with ranking the documents (110-n~0) in the first set (100~0) by indexing with an Okapi BM25 tool.

4. Method according to any of claims 1 to 3, wherein selecting (420) is performed for the property condition (C2) being a lexical condition.

5. Method according to any of claims 1 to 4, wherein selecting (420) is performed for the property condition (C2) by comparing the keyword occurrence number (Key_n(t)) to a pre-defined match parameter (p).

6. Method according to claim 5, wherein comparing uses a magnitude relation with the match parameter that (p) being a threshold value.

7. Method according to any of the preceding claims, wherein classifying (430) the sentences (120-n-k~2) into sentences with either a first sentence attribute (+) or a second sentence attribute (-) comprises to classify sentences with the first attribute (+) for sentences that belong to the topic and that comprise arguments.

8. Method according to any of the preceding claims, wherein providing (440) the training data comprise to provide sentences with the second sentence attribute (-), wherein the share of the sentences with the second sentence attribute (-) is smaller than the share of the sentences with the first sentence attribute (+).

9. Method according to any of the preceding claims, wherein in the selecting step (420), the property condition is a condition selected from the following: argument condition and operation mode condition.

10. Computer-system (201) adapted to provide machine-learning training data (125) for a differentiator module (202) that is adapted to identify a document property (370), the computer-system (201) performing a method according any of claims 1-9.

11. A computer program product that - when loaded into a memory of a computer and being executed by at least one processor of the computer - performs the steps of the computer-implemented method according to any of claims 1-9.

reference
documents
110

100~0

125
training
data
(+)(-)

201 computer

201-A selector

candidate
set
100~2

201-B classifier

200

202
computer

(differentiator)

310
to-be-
classified
documents

300

300

310*
classified
documents

370, 380
property

FIG. 1

130-1-1-1    120-1-1

| | |
|---|---|
| (+) | *Dogs are animals* |
| (+) | |
| (+) | |
| | |
| | |

110-2

110-1
document

110-1
document

| |
|---|
| 120-n-1 sentence |
| 120-n-2 |
| |
| 120-n-m |
| |
| 120-n-Mn |

110-n

110-N

100~0

100~Y

**FIG. 2**

110-1 -set of a document is the set of all words of all sentences in that document. Dogs are animals. Dogs are always <u>nice</u>. The dog was born in April.

argument

111-1 -set of a document is the set of all words of all sentences in that document. dog, dogs, animal, always, <u>nice</u>, born, April, are, in, the

Γ

## FIG. 3

131 -set of a document is the set of all words of all sentences in that document. "<u>nice</u>", "ugly", "dangerous", "beautiful", "trouble"

Π

131'
"percent", "impact", "growth", "majority", "evidence", "raising", "justify", "reduce", "confirm", "<u>statistical</u>", "opposite", "efficiency", "reveals", "thereby", "weak", "impressive", "reduces", "<u>decrease</u>", "decline", "dramatically", "refuted", "objection", "contested", "reject", "improved", "argues", "unfair", "insufficient", "debates", "expand", "disadvantages", "poorly", "influence"

Π

## FIG. 4

| 110-1 | 110-2 | 110-3 | 110-4 | 110-5 | 110-6 | 110-7 | | 110-N |
|-------|-------|-------|-------|-------|-------|-------|---|-------|

. . .    $100\sim0$

$N\sim0$

**201-A selector module**

topic condition C1(t)

| Yes | Yes | No | Yes | Yes | Yes | No | Yes |
|-----|-----|-----|-----|-----|-----|----|-----|
| 110-1 | 110-2 | | 110-4 | 110-5 | 110-6 | | 110-N |

$100\sim1$

$N\sim1$

argument condition C2

| Yes | No | No | Yes | No | No | Yes | Yes |
|-----|----|----|-----|----|----|-----|-----|

| 110-1 | | 110-4 | | . . . | 110-N |
|-------|---|-------|---|-------|-------|

$100\sim2$

$N\sim2$

**FIG. 5**

110-1
120-1-1

120-1-2

120-1-3

110-4
120-4-1

120-4-2

120-4-3

110-N
120-N-1

120-N-2

120-N-3

100~2

in
M~2

201-B
classifier

(+)    241
(-)

242
(+)'
(-)'
( )'
(x)'

PROPERTY

out

$S^+ = 3$        $S^- = 3$

120-1-1
(+)

120-1-2
(-)

120-4-1
(+)

120-4-2
(+)

120-N-3
(-)

120-N-1
(-)

125

FIG. 6

```
┌─────────────────────────┐
│ 410                     │
│ receiving               │
│                         │
└─────────────────────────┘
             │
             ▼
┌─────────────────────────┐
│ 420                     │
│ selecting               │
│                         │
└─────────────────────────┘
             │
             ▼
┌─────────────────────────┐
│ 430                     │
│ classifying             │
│                         │
└─────────────────────────┘
             │
             ▼
┌─────────────────────────┐
│ 440                     │
│ collecting              │
│ training data           │
└─────────────────────────┘
```

400

# FIG. 7

FIG. 8

FIG. 9

FIG. 10

Europäisches
Patentamt

European
Patent Office

Office européen
des brevets

**EUROPEAN SEARCH REPORT**

Application Number

EP 19 17 7419

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/270096 A1 (SHEAFER TAMIR [IL] ET AL) 21 September 2017 (2017-09-21) * the whole document * ----- | 1-11 | INV. G06F16/55 |
| X | US 7 251 644 B2 (MICROSOFT CORP [US]) 31 July 2007 (2007-07-31) * the whole document * ----- | 1-11 | |

TECHNICAL FIELDS
SEARCHED        (IPC)

G06F

The present search report has been drawn up for all claims

| Place of search | Date of completion of the search | Examiner |
|---|---|---|
| Berlin | 2 October 2019 | Écolivet, Stéphane |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 17 7419

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2019

| Patent document cited in search report | | Publication date | Patent family member(s) | | Publication date |
|---|---|---|---|---|---|
| US 2017270096 | A1 | 21-09-2017 | NONE | | |
| US 7251644 | B2 | 31-07-2007 | US | 2005125402 A1 | 09-06-2005 |
| | | | US | 2005125746 A1 | 09-06-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10013470 B2

**Non-patent literature cited in the description**

- **CHRISTIAN STAB et al.** Cross-topic Argument Mining from Heterogeneous Sources. *Proceedings of the 2018 Conference on Empirical Methods in Natural Language Processing,* 31 October 2018, 3664-3674

- **REYNAR, JEFFREY C et al.** A Maximum Entropy Approach to identify Sentence Boundaries. *ANLC '97 Proceedings of the fifth conference on Applied natural language processing,* 31 March 1997, 16-19
- Okapi at TREC-25. **ROBERTSON, STEPHEN E. et al.** Proceedings of the Third Text REtrieval Conference. NIST, 109-126